# EUROPÄISCHE PATENTSCHRIFT

(11) **EP 3 589 829 B1**
(45) Veröffentlichungstag und Bekanntmachung des Hinweises auf die Patenterteilung: **23.04.2025**
(21) Anmeldenummer: 18711023.4
(22) Anmeldetag: 27.02.2018
(51) Int. Cl.: F02D 41/06, B60W 20/40, B60W 30/192, B60W 30/194, B60W 30/18

(54) **VERFAHREN ZUM BETREIBEN EINER VERBRENNUNGSKRAFTMASCHINE EINES HYBRIDKRAFTFAHRZEUGS WÄHREND EINES STARTVORGANGS GENANNTER VERBRENNUNGSKRAFTMASCHINE**
METHOD FOR OPERATING AN INTERNAL COMBUSTION ENGINE OF A HYBRID VEHICLE DURING THE START PROCESS OF SAID INTERNAL COMBUSTION ENGINE
MÉTHODE POUR FAIRE FONCTIONNER UN MOTEUR À COMBUSTION INTERNE D'UN VÉHICULE HYBRIDE LORS DU PROCÉDÉ DE DÉMARRAGE DUDIT MOTEUR À COMBUSTION INTERNE

(30) Priorität: 01.03.2017 DE 102017203347
(43) Veröffentlichungstag der Anmeldung: 08.01.2020
(73) Patentinhaber: Volkswagen Aktiengesellschaft, 38440 Wolfsburg (DE)
(72) Erfinder: JUNGNICKEL, Christian, 38551 Ribbesbüttel (DE)
(86) Internationale Anmeldenummer: PCT/EP2018/054722
(87) Internationale Veröffentlichungsnummer: WO 2018/158205

(56) Entgegenhaltungen:
- DE-A1- 102011 078 446
- US-A1- 2011 146 622
- US-A1- 2012 067 327

## Beschreibung

Die Erfindung betrifft ein Verfahren zum Betreiben einer Verbrennungskraftmaschine eines Kraftfahrzeugs, insbesondere eines Hybridfahrzeugs, während eines Startvorgangs der Verbrennungskraftmaschine, insbesondere während eines Startvorgangs aus einem Stillstand der Verbrennungskraftmaschine auf hohe Drehmomente. Weiterhin betrifft die Erfindung eine Motorsteuerung zum Ausführen des erfindungsgemäßen Verfahrens und ein Kraftfahrzeug mit einer solchen Motorsteuerung.

Hybridfahrzeuge weisen üblicherweise einen Verbrennungsmotor und eine elektrische Maschine auf, die jeweils ein Antriebsmoment als Anteil an einem Gesamtmoment stellen. Wie in der DE 10 2007 055 740 A1 und der DE 10 2013 004 033 A1 beschrieben, werden die einzelnen Momente des Verbrennungsmotors und der elektrischen Maschine aufeinander abgestimmt.

In einem Fahrzeug mit Parallelhybridantriebsstrang mit einer Trennkupplung zwischen der Verbrennungskraftmaschine und dem restlichem Antriebsstrang kann es auf Grund einer Fahrerwunschanforderung vorkommen, dass die Verbrennungskraftmaschine direkt mit hoher Last betrieben wird. Auf Grund fehlender Schmierung bzw. zeitlich verzögertem Öldruckaufbau kann es durch die sofortige Lastanforderung zu Bauteilschädigung an Lagern, wie beispielsweise der Kurbelwelle, Pleuel oder am Aufladesystem auf Grund von Festkörper- oder Mischschmierung kommen.

Um einen solchen Verschleiß zu verringern, kann die Verbrennungskraftmaschine im elektrischen Betrieb geschmiert (angedreht) werden, um so die Ölgalerie zu befüllen bzw. die Bauteile der Verbrennungskraftmaschine mit Öl zu versorgen. Es gibt allerdings Situationen, in denen ein Schmieren der Verbrennungskraftmaschine auf Grund der Fahrsituationen nicht durchgeführt werden kann. Somit kann es weiterhin zu einer möglichen Schädigung der Verbrennungskraftmaschine kommen.

Die DE 10 2011 005 803 A1 beschreibt ein Verfahren zum Betreiben eines Hybridfahrzeugs, wobei ein Verbrennungsmotor nur zugeschaltet wird, wenn ein angefordertes Wunschmoment mindestens um einen Differenzbetrag höher ist als ein maximal durch einen Elektromotor erzielbares Moment.

Die DE 10 2012 009 481 A1 beschreibt ein Verfahren zur Steuerung einer Zuschaltung eines Verbrennungsmotors einer Hybridantriebseinheit, wobei der Verbrennungsmotor in einer ersten Phase nach dem Start bei einem gegenüber einem Zieldrehmoment abgesenkten Drehmoment betrieben wird und das Drehmoment anschließend, sobald eine Motortemperatur eine vorgegebene Temperatur erreicht hat, in einer zweiten Phase auf das Zieldrehmoment angehoben wird.

Die US 2012/067327 A1 beschreibt ein Verfahren, bei dem in Abhängigkeit einer Motortemperatur und einer Motorgeschwindigkeit ein maximales Drehmoment bestimmt wird. Zusätzlich kann das maximale Drehmoment von einem Druckverhältnis zwischen Luftzuführung und Abgastrakt abhängen.

Die DE 10 2011 078 446 A1 beschreibt ein Verfahren, wobei ein maximales Drehmoment beim Kaltstart in Abhängigkeit von Umgebungsbedingungen, beispielsweise einer Umgebungstemperatur, bestimmt wird.

Die US 2011/0146622 A1 offenbart ein Verfahren zum Begrenzen eines Drehmoments in Abhängigkeit einer Motortemperatur, einer Zeit seit Überschreiten einer Motorgeschwindigkeit oder einer Zeit seit Überschreiten einer Motorgeschwindigkeit und eines Motordrucks.

Durch das Bereitstellen eines reduzierten Moments durch die Verbrennungskraftmaschine kann es jedoch zu unerwünschten Einbußen im Fahrkomfort kommen, da das Wunschmoment nicht unmittelbar bereitgestellt werden kann.

Aufgabe der vorliegenden Erfindung ist es, ein Verfahren und eine Motorsteuerung zum Betreiben einer Verbrennungskraftmaschine eines Kraftfahrzeugs während eines Startvorgangs der Verbrennungskraftmaschine bereitzustellen, die die oben genannten Nachteile wenigstens teilweise überwinden.

Diese Aufgabe wird durch das erfindungsgemäße Verfahren zum Betreiben einer Verbrennungskraftmaschine eines Kraftfahrzeugs während eines Startvorgangs der Verbrennungskraftmaschine nach Anspruch 1 und die erfindungsgemäße Motorsteuerung nach Anspruch 6 gelöst.

Gemäß einem ersten Aspekt betrifft die Erfindung ein Verfahren zum Betreiben einer Verbrennungskraftmaschine eines Kraftfahrzeugs während eines Startvorgangs der Verbrennungskraftmaschine, umfassend:
Erhalten einer Schmierzustandsgröße, die einen Schmierzustand der
Verbrennungskraftmaschine abbildet;
Bestimmen eines maximal zulässigen Drehmoments der Verbrennungskraftmaschine abhängig von der Schmierzustandsgröße; und
Betreiben der Verbrennungskraftmaschine bei einem Betriebsdrehmoment, das dem bestimmten maximal zulässigen Drehmoment entspricht oder kleiner als dieses ist.

Gemäß einem zweiten Aspekt betrifft die Erfindung eine Motorsteuerung zum Betreiben einer Verbrennungskraftmaschine eines Kraftfahrzeugs während eines Startvorgangs der Verbrennungskraftmaschine, die dazu ausgebildet ist, ein Verfahren nach dem ersten Aspekt auszuführen.

Weitere vorteilhafte Ausgestaltungen der Erfindung ergeben sich aus den Unteransprüchen und der folgenden Beschreibung bevorzugter Ausführungsbeispiele der vorliegenden Erfindung.

Die vorliegende Erfindung betrifft ein Verfahren zum Betreiben einer Verbrennungskraftmaschine eines Kraftfahrzeugs während eines Startvorgangs der Verbrennungskraftmaschine, insbesondere während eines Startvorgangs der Verbrennungskraftmaschine aus einem Stillstand auf hohe Drehmomente, vorzugsweise maximale Drehmomente. Ein solcher Startvorgang wird auch als kritischer Zustart der Verbrennungskraftmaschine bezeichnet. Das erfindungsgemäße Verfahren findet somit Anwendung, wenn die Verbrennungskraftmaschine ausgehend von einem Stillstand der Verbrennungskraftmaschine direkt mit hoher Last betrieben wird.

Bei einem Hybridfahrzeug mit einer elektrischen Antriebsmaschine und der Verbrennungskraftmaschine, die beispielsweise ein Ottomotor oder ein Dieselmotor sein kann, kann der Startvorgang ein Start der Verbrennungskraftmaschine aus einem rein elektrischen Betriebsmodus des Hybridfahrzeugs und/oder ein Start während eines hybridischen Betriebsmodus des Hybridfahrzeugs sein. Alternativ oder zusätzlich kann der Startvorgang ein Start während eines Segelbetriebs des Hybridfahrzeugs sein. Bei einem Fahrzeug mit der Verbrennungskraftmaschine, beispielsweise einem Ottomotor oder einer DieselBrennkraftmaschine, als einzigem Antriebselement kann der Startvorgang ein Start während eines Segelbetriebs des Fahrzeugs sein.

Gemäß dem erfindungsgemäßen Verfahren wird eine Schmierzustandsgröße erhalten, die einen Schmierzustand der Verbrennungskraftmaschine abbildet. Der Schmierzustand der Verbrennungskraftmaschine kann eine Verteilung eines Schmiermittels, beispielsweise von Motoröl, auf einem oder mehreren Bauteilen der Verbrennungskraftmaschine, die einer Reibkraft ausgesetzt sind, sein. Die Bauteile der Verbrennungskraftmaschine umfassen beispielsweise eine oder mehrere Komponenten eines Kurbeltriebs, wie eine Kurbelwelle, Pleuel (Kolben), Pleuelstangen und/oder dergleichen, und/oder eine oder mehrere Komponenten eines Aufladesystems, wie einen Abgasturbolader, eine Abgasklappe und/oder dergleichen, umfassen.

Die Schmierzustandsgröße kann beispielsweise von einem Sensor erfasst sein bzw. von einer Analyseeinheit beispielsweise in Form eines Prozessors zum Beispiel mit Hilfe eines oder mehrerer Modelle erzeugt und bereitgestellt sein und anschließend insbesondere von einer Motorsteuerung empfangen werden. Beispiele für die Schmierzustandsgröße werden weiter unten aufgelistet und erklärt.

Weiterhin wird gemäß dem erfindungsgemäßen Verfahren abhängig von der erhaltenen Schmierzustandsgröße ein maximal zulässiges Drehmoment der Verbrennungskraftmaschine (maximal zulässiges verbrennungsmotorisches Drehmoment) bestimmt. Das maximal zulässige Drehmoment ist eine von der Schmierzustandsgröße abhängige Drehmomentgrenze, bei deren Überschreiten eine Mischreibung an den Bauteilen der Verbrennungskraftmaschine auftritt, die zu einem unerwünschten Verschleiß dieser führt.

Das maximal zulässige Drehmoment kann beispielsweise anhand von Modellen ermittelt sein und als Kennlinie oder Kennfeld hinterlegt sein und/oder mathematisch berechnet sein. Details zur Bestimmung des maximal zulässigen Drehmoments werden weiter unten im Detail beschrieben.

Anschließend wird gemäß dem erfindungsgemäßen Verfahren die Verbrennungskraftmaschine bei einem Betriebsdrehmoment betrieben, insbesondere gestartet und betrieben, das dem bestimmten maximal zulässigen Drehmoment entspricht oder kleiner als dieses ist.

Durch den Betrieb der Verbrennungskraftmaschine während des Startvorgangs unterhalb einer Volllast, d.h. unterhalb eines maximal möglichen Drehmoments bzw. eines maximal abrufbaren Drehmoments kann eine Schmierung in Gang gesetzt werden, so dass eine Mischreibung verringert bzw. vermieden wird und sich vorwiegend eine gewünschte Gleitreibung einstellt. Es erfolgt somit ein bedarfsgerechter Schutz der Verbrennungskraftmaschine, um Schäden an der Verbrennungskraftmaschine bzw. an einem Triebwerk und Triebwerkskomponenten zu vermeiden.

In manchen Ausführungsbeispielen kann die Schmierzustandsgröße eine Schmiermitteltemperatur eines Schmiermittels in der Verbrennungskraftmaschine, ein Schmiermitteldruck des Schmiermittels in der Verbrennungskraftmaschine, eine Zeit nach einem Ende eines Stillstands der Verbrennungskraftmaschine, eine Kühlmitteltemperatur der Verbrennungskraftmaschine, ein Kühlmitteldruck der Verbrennungskraftmaschine, eine Anzahl an Verbrennungen und/oder Kurbelwellenumdrehungen seit dem Ende des Stillstands der Verbrennungskraftmaschine, eine Dauer eines vorangegangenen Stillstands der Verbrennungskraftmaschine, eine Dauer seit einem vorangegangen Schmiervorgang der Verbrennungskraftmaschine, eine Dauer eines vorangegangenen Betriebs der Verbrennungskraftmaschine, eine Dauer eines vorangegangenen Schmiervorgangs der Verbrennungskraftmaschine, eine Eigenschaft eines vorangegangenen Schmiervorgangs und/oder eine andere Schmierzustandsgröße umfassen.

Die Schmiermitteltemperatur kann eine Temperatur des Schmiermittels in einem Schmiermittelkreislauf der Verbrennungskraftmaschine sein, beispielsweise eine Öltemperatur in einer Ölgalerie oder in einer Ölleitung des Schmiermittelkreislaufs. Die Schmiermitteltemperatur kann von einem Temperatursensor in dem Schmiermittelkreislauf, beispielsweise in der Ölgalerie oder in der Ölleitung, erfasst sein und/oder durch ein Modell, insbesondere ein Schmiermitteltemperaturmodell, bereitgestellt sein. Entsprechend kann der Schmiermitteldruck des Schmiermittels ein Druck des Schmiermittels in dem Schmiermittelkreislauf sein und von einem Drucksensor in dem Schmiermittelkreislauf erfasst und/oder durch ein Modell, insbesondere ein Schmiermitteldruckmodel, bereitgestellt sein.

Die Kühlmitteltemperatur der Verbrennungskraftmaschine kann eine Temperatur eines Kühlmittels, beispielsweise von Kühlwasser, in einem Kühlkreislauf der Verbrennungskraftmaschine sein und mittels eines Temperatursensors, der in dem Kühlkreislauf angeordnet ist, erfasst und/oder durch ein Modell, insbesondere ein Kühlmitteltemperaturmodell, bereitgestellt sein. Entsprechend kann der Kühlmitteldruck des Kühlmittels ein Druck des Kühlmittels in dem Kühlkreislauf sein und von einem Drucksensor in dem Kühlkreislauf erfasst und/oder durch ein Modell, insbesondere ein Kühlmitteldruckmodell, bereitgestellt sein.

Die Zeit nach einem Ende des Stillstands der Verbrennungskraftmaschine, d.h. seit Beginn des Startvorgangs der Verbrennungskraftmaschine, und/oder die Anzahl an Verbrennungen und/oder an Kurbelwellenumdrehzungen seit dem Ende des Stillstands der Verbrennungskraftmaschine, d.h. seit Beginn des Startvorgangs der Verbrennungskraftmaschine, können beispielsweise aus einem Signal eines Kurbelwellensensors abgeleitet sein.

Die Dauer des vorangegangenen Stillstands der Verbrennungskraftmaschine, beispielsweise eine Abstelldauer der Verbrennungskraftmaschine, die Dauer seit dem vorangegangenen Schmiervorgang der Verbrennungskraftmaschine, die Dauer des vorangegangenen Betriebs der Verbrennungskraftmaschine, die Dauer des vorangegangenen Schmiervorgangs der Verbrennungskraftmaschine, d.h. eine vorangegangene Verbrennungslaufzeit, können mittels Zeitmessung erfasst sein, beispielsweise getriggert durch ein gespeichertes Kurbelwellensignal eines Kurbelwellensensors.

Die Eigenschaft des vorangegangenen Schmiervorgangs kann beispielsweise eine Schmiermittel- und/oder Kühlmitteltemperatur bzw. einen Schmiermittel- und/oder Kühlmitteldruck, eine Anzahl der Verbrennungen und/oder Kurbelwellenumdrehungen während des vorangegangenen Schmiervorgangs und/oder eine andere Eigenschaft umfassen.

In manchen Ausführungsbeispielen kann das maximal zulässige Drehmoment der Verbrennungskraftmaschine mit einem Anstieg der Schmierzustandsgröße während des Startvorgangs der Verbrennungskraftmaschine steigen. Das maximal zulässige Drehmoment kann vorzugsweise kontinuierlich, beispielsweise linear, quadratisch oder exponentiell, steigen. Somit wird in Situationen, in denen ein kritischer Zustart der Verbrennungskraftmaschine, d.h. ein Start aus dem Stillstand auf hohe Drehmomente, erfolgt, das maximal zulässige Drehmoment begrenzt und anschließend auf ein maximal abrufbares Drehmoment verrampt bzw. vergrößert.

Beispielsweise kann ausgehend von der Schmiermitteltemperatur ein maximal zulässiger Drehmomentgrundwert bestimmt werden. Ausgehend von dem maximal zulässigen Drehmomentgrundwert kann ein maximal begrenztes zulässiges Drehmoment dann mit steigender Zeit nach dem Verbrennerstart ansteigen. Abhängig von einem Zusammenhang zwischen Schmiermitteltemperatur und Kühlmitteltemperatur kann der maximal begrenzte zulässige Drehmomentgrundwert angepasst werden. Zusätzlich oder alternativ kann das maximal zulässige Drehmoment nach einer vorgegebenen Anzahl an Verbrennungen seit dem Start auf das maximal abrufbare Drehmoment angehoben werden.

In manchen Ausführungsbeispielen kann abhängig von der Zeit nach dem Ende des Stillstands der Verbrennungskraftmaschine sowie abhängig von der Schmiermitteltemperatur des Schmiermittels in der Verbrennungskraftmaschine oder des Schmiermitteldrucks des Schmiermittels in der Verbrennungskraftmaschine ein maximal zulässiges Grunddrehmoment bestimmt werden.

Da es während des Startvorgang nur zu geringen Veränderung der Schmiermitteltemperatur in der Verbrennungskraftmaschine kommt, ergibt sich der maximal zulässige Drehmomentgrundwert aus der Schmiermitteltemperatur und das maximal zulässige Grunddrehmoment nimmt ausgehend von dem maximal zulässigen Drehmomentgrundwert mit steigender Zeit nach dem Verbrennerstart zu.

Das maximal zulässige Grunddrehmoment kann beispielsweise mittels einer Kennlinie oder eines Kennfelds, beispielsweise eines Kennfelds über die Zeit nach dem Verbrennerstart und die Schmiermitteltemperatur, bestimmt werden und/oder mathematisch berechnet sein.

In manchen Ausführungsbeispielen kann abhängig von der Schmiermitteltemperatur und/oder der Kühlmitteltemperatur ein Anpassungsfaktor bestimmt werden und das maximal zulässige Grunddrehmoment abhängig von dem bestimmten Anpassungsfaktor anpasst werden.

Der Anpassungsfaktor kann aus einer Kennlinie oder einem Kennfeld abgelesen bzw. abgeleitet werden. Die Kennlinie bzw. das Kennfeld können vorzugsweise auf Grundlage von experimentellen Messungen mittels Modellen erzeugt sein. Beispielsweise kann der Anpassungsfaktor aus einem Kennfeld über die Schmier- und die Kühlmitteltemperatur abgelesen werden, die einen Zusammenhang zwischen der Schmier- und Kühlmitteltemperatur einerseits und dem Schmierzustand der Verbrennungskraftmaschine andererseits widergibt.

Somit kann im Falle eines kritischen Zustarts der Verbrennungskraftmaschine in Abhängigkeit der Schmiermittel- bzw. Kühlmitteltemperatur das maximale zulässige Verbrennermoment (maximal zulässiges Drehmoment) begrenzt und anschließend über die Zeit nach Verbrennerstart auf sein Maximum (maximal abrufbares Drehmoment) verrampt bzw. vergrößert werden. Dadurch lässt sich der Verschleiß der Verbrennungskraftmaschine bei einem kritischen Zustart dieser deutlich minimieren.

In manchen Ausführungsbeispielen kann das maximal zulässige Grunddrehmoment bzw. das angepasste maximal zulässige Grunddrehmoment nach einer vorgegebenen Anzahl an Verbrennungen und/oder einer vorgegebenen Anzahl an Kurbelwellenumdrehungen der Verbrennungskraftmaschine seit dem Ende des Stillstands der Verbrennungskraftmaschine auf das maximal abrufbare Drehmoment (maximal mögliches Drehmoment) erhöht werden. Die vorgegebene Anzahl der Verbrennungen kann eine Anzahl an Verbrennungen sein, nach der die Verbrennungskraftmaschine ausreichend geschmiert ist, so dass auch bei hoher bzw. maximaler Last vorwiegend Gleitreibung herrscht. Die vorgegebene Anzahl der Verbrennungen kann experimentell bestimmt sein oder mittels eines Modells bestimmt sein. Analoges gilt für die Anzahl an Kurbelwellenumdrehungen.

Damit kann verhindert werden, dass das Verbrennermoment über einen unnötig langen Zeitraum begrenzt ist.

In manchen Ausführungsbeispielen kann abhängig von der Dauer des vorangegangenen Stillstands der Verbrennungskraftmaschine, der Dauer seit dem vorangegangenen Schmiervorgang der Verbrennungskraftmaschine, der Dauer des vorangegangenen Betriebs der Verbrennungskraftmaschine und/oder der Dauer des vorangegangenen Schmiervorgangs der Verbrennungskraftmaschine ein Erhöhungsfaktor bestimmt werden und das maximal zulässige Grunddrehmoment bzw. das angepasste maximal zulässige Grunddrehmoment abhängig von dem bestimmten Erhöhungsfaktor anpasst werden. Vorzugsweise kann der Erhöhungsfaktor gleich oder größer 1 sein.

Der Erhöhungsfaktor kann aus einer Kennlinie oder einem Kennfeld abgelesen bzw. abgeleitet werden. Die Kennlinie bzw. das Kennfeld können vorzugsweise auf Grundlage von experimentellen Messungen mittels Modellen erzeugt sein. Beispielsweise kann der Erhöhungsfaktor aus einer Rückflusskennlinie abgelesen werden, die eine Abhängigkeit eines Schmiermittelstands der Verbrennungskraftmaschine von einer schmierungsfreien Zeit bzw. der Dauer der Stillstands der Verbrennungskraftmaschine widergibt. Der Schmiermittelstand gibt vorzugsweise an, wieviel des Schmiermittels in einer Ölgalerie verblieben ist und/oder in einen Ölbehälter der Verbrennungskraftmaschine zurückgeflossen ist. Alternativ kann auch ein Rückflusskennfeld herangezogen werden.

Beispielsweise kann ein erster Faktor abhängig von der Dauer des vorangegangenen Betriebs der Verbrennungskraftmaschine und der Dauer des vorangegangenen Schmiervorgangs der Verbrennungskraftmaschine bestimmt werden. Außerdem oder alternativ kann ein zweiter Faktor abhängig von der Dauer des vorangegangenen Stillstands der Verbrennungskraftmaschine und der Dauer seit dem vorangegangenen Schmiervorgang der Verbrennungskraftmaschine bestimmt werden. Der erste Faktor und der zweite Faktor können dann zu dem Erhöhungsfaktor kombiniert werden. Alternativ kann der erste Faktor oder der zweite Faktor als Erhöhungsfaktor zum Einsatz kommen.

Der kritische Zustart kann somit zusätzlich über die Dauer des letzten Schmiervorgangs bzw. der letzten Verbrennerlaufzeit bewertet werden. Zusätzlich oder alternativ kann der kritische Zustart auch über eine lange Motorabstelldauer bzw. einen sehr lang zurückliegenden Schmiervorgang bewertet werden. Lange Abstellzeiten führen zu einem Rücklaufen des Schmiermittels in einer Ölwanne und einem Leerlaufen der Ölgalerie.

In manchen Ausführungsbeispielen kann das Betriebsdrehmoment, wenn ein maximal mögliches Drehmoment angefordert wird, während des Startvorgangs dem maximal zulässigen Drehmoment entsprechen.

Wenn es zum Erfüllen eines Fahrerwunschmoments notwendig ist, dass ein maximal mögliches Drehmoment eingestellt wird, kann somit das maximal zulässige Drehmoment der Verbrennungskraftmaschine eingestellt werden, wobei sich das maximal zulässige Drehmoment während des Startvorgangs an das maximal mögliche Drehmoment annähert und dem maximal möglichen Drehmoment zum Ende des Startvorgangs entspricht.

In manchen Ausführungsbeispielen kann die Verbrennungskraftmaschine, die eine Verbrennungskraftmaschine eines Hybridfahrzeugs ist, das weiterhin eine elektrische Antriebsmaschine oder einen anderen Antrieb aufweist, während eines Betriebs der elektrischen Antriebsmaschine oder des anderen Antriebs gestartet werden. Wie oben bereits erwähnt, kann der Startvorgang nur aus einem rein elektrischen Betriebsmodus des Hybridfahrzeugs und/oder während eines hybridischen Betriebsmodus des Hybridfahrzeugs erfolgen. Alternativ oder zusätzlich kann der Startvorgang ein Start während eines Segelbetriebs des Hybridfahrzeugs sein.

Das erfindungsgemäße Verfahren zum Betreiben einer Verbrennungskraftmaschine eines Kraftfahrzeugs während eines Startvorgangs ermöglicht einen bedarfsgerechten Schutz der Verbrennungskraftmaschine und zugehöriger Bauteile vor einer Schädigung, eine Reduktion von mechanischem Verschleiß an Bauteilen und damit ein erhöhte Lebensdauer der Komponenten.

Die vorliegende Erfindung betrifft weiterhin eine Motorsteuerung zum Betreiben einer Verbrennungskraftmaschine eines Kraftfahrzeugs während eines Startvorgangs der Verbrennungskraftmaschine, wobei die Motorsteuerung dazu ausgebildet ist, ein Verfahren zum Betreiben einer Verbrennungskraftmaschine eines Kraftfahrzeugs während eines Startvorgangs, wie es voranstehend beschrieben ist, auszuführen.

Die Motorsteuerung ist dazu ausgebildet, eine Schmierzustandsgröße zu erhalten, die einen Schmierzustand der Verbrennungskraftmaschine abbildet, abhängig von der Schmierzustandsgröße ein maximal zulässiges Drehmoment der Verbrennungskraftmaschine zu bestimmen und die Verbrennungskraftmaschine bei einem Betriebsdrehmoment, das dem bestimmten maximal zulässigen Drehmoment der Verbrennungskraftmaschine entspricht oder kleiner als dieses ist, zu betreiben.

Die Motorsteuerung kann einen Prozessor, beispielsweise einen Mikroprozessor, aufweisen, der dazu ausgebildet ist, das beschriebene erfindungsgemäße Verfahren auszuführen. Die Motorsteuerung kann weiterhin einen Datenspeicher aufweisen, in dem vorzugsweise ein Programm hinterlegt ist, das Anweisungen für den Prozessor enthält, um diesen entsprechend dem beschriebenen Verfahren zu steuern. In dem Datenspeicher können zudem Kennlinien, Kennfelder und/oder andere Parameter, die zum Ausführen des Verfahrens notwendig sind, beispielsweise die oben erwähnten, Modelle, Kennlinien, Kennfelder und/oder anderen Parameter, hinterlegt sein.

Die Motorsteuerung kann eine Reihe von Signaleingängen und Signalausgängen aufweisen. Über die Signaleingänge können beispielsweise Daten wie die Schmierzustandsgröße empfangen werden. Über die Signalausgänge kann die Verbrennungskraftmaschine angesteuert werden.

Die vorliegende Erfindung betrifft ein Kraftfahrzeug mit einer Verbrennungskraftmaschine, beispielsweise einem Ottomotor oder einem Dieselmotor, und einer Motorsteuerung, die wie oben beschrieben ausgebildet ist.

Das Kraftfahrzeug kann ein Hybridfahrzeug mit der Verbrennungskraftmaschine und einer elektrischen Antriebsmaschine sein. Beispielsweise kann das Hybridfahrzeug ein Parallelhybridfahrzeug sein.

Ausführungsbeispiele der Erfindung werden nun beispielhaft und unter Bezugnahme auf die beigefügten Zeichnungen beschrieben. Es zeigen:
- Fig. 1: eine schematische Darstellung eines erfindungsgemäßen Hybridfahrzeugs;
- Fig. 2: ein Flussdiagramm eines Verfahrens zum Betreiben einer Verbrennungskraftmaschine eines Kraftfahrzeugs während eines Startvorgangs aus einem Stillstand auf hohe Lasten;
- Fig. 3: eine Darstellung eines Verlaufs eines maximal zulässigen Drehmoments der Verbrennungskraftmaschine;
- Fig. 4: ein Flussdiagramm eines Verfahrens zum Bestimmen des maximal zulässigen Drehmoments der Verbrennungskraftmaschine;
- Fig. 5: eine schematische Darstellung eines maximal zulässigen Grunddrehmoments der Verbrennungskraftmaschine in Abhängigkeit einer Öltemperatur und einer Zeit seit einem Ende eines Stillstands der Verbrennungskraftmaschine;
- Fig. 6: eine schematische Darstellung eines Anpassungsfaktors in Abhängigkeit der Öltemperatur und einer Kühltemperatur;
- Fig. 7: ein Flussdiagramm eines Verfahrens zum Bestimmen eines Erhöhungsfaktors;
- Fig. 8: eine schematische Darstellung eines ersten Faktors in Abhängigkeit einer Dauer eines vorangegangenen Betriebs der Verbrennungskraftmaschine und einer Dauer eines vorangegangenen Schmiervorgangs der Verbrennungskraftmaschine; und
- Fig. 9: eine schematische Darstellung eines zweiten Faktors in Abhängigkeit einer Dauer eines vorangegangenen Stillstands der Verbrennungskraftmaschine und einer Dauer seit einem vorangegangenen Schmiervorgang der Verbrennungskraftmaschine.

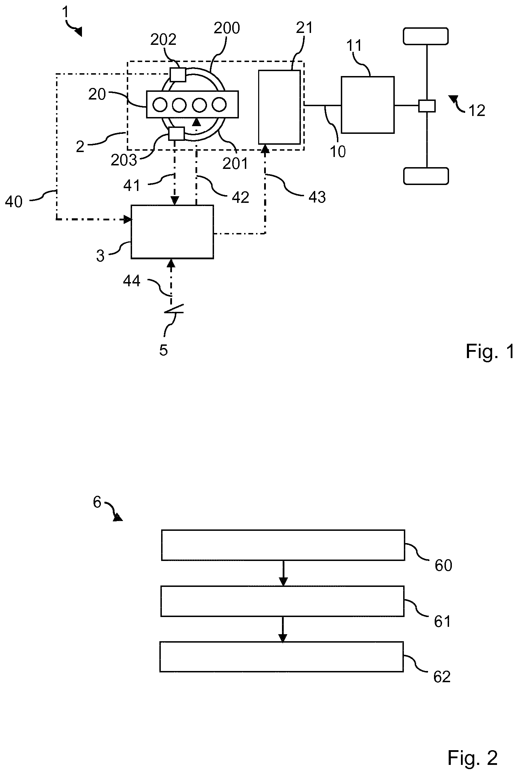

Ein Ausführungsbeispiel eines Hybridfahrzeugs 1 ist in Fig. 1 schematisch gezeigt. Das Hybridfahrzeug 1 umfasst einen Antriebsstrang mit einer Antriebsvorrichtung 2, die über eine Kurbelwelle 10 und ein Getriebe 11 mit einer Antriebsachse 12 verbunden ist, um mit der Antriebsachse 12 verbundene Räder des Hybridfahrzeugs 1 zu bewegen. Die Antriebsvorrichtung 2 weist als Antriebsaggregate eine Verbrennungskraftmaschine 20 mit einem Schmiermittelkreislauf 200 und einem Kühlmittelkreislauf 201 und eine elektrische Maschine 21 (E-Maschine) auf.

Das Hybridfahrzeug 1 weist, wie in Fig. 1 gezeigt, außerdem eine Motorsteuerung 3 auf. Die Motorsteuerung 3 ist über eine Datenleitung 40 mit einem Öltemperatursensor 202 in dem Schmiermittelkreislauf 200, über eine Datenleitung 41 mit einem Kühlwassertemperatursensor 203 in dem Kühlmittelkreislauf 201 und über eine Datenleitung mit einem Kurbelwellenwinkelsensor (nicht gezeigt) verbunden, um eine von dem Öltemperatursensor 202 erfasste Öltemperatur, eine von dem Kühlwassertemperatursensor 203 erfasste Kühlwassertemperatur bzw. ein von dem Kurbelwellenwinkelsensor erfasstes Kurbelwellensignal zu empfangen. Weiterhin ist die Motorsteuerung 3 über eine Datenleitung 42 mit der Verbrennungskraftmaschine 20 und über eine Datenleitung 43 mit der E-Maschine 21 verbunden, um die Verbrennungskraftmaschine 20 bzw. die E-Maschine 21 zu steuern. Außerdem ist die Motorsteuerung 3 über eine Datenleitung 44 mit einem Sensor (nicht gezeigt) an einem Gaspedal 5 verbunden, um ein Stellsignal, das einen Fahrerwunsch enthält, zu empfangen.

Die Motorsteuerung 3 enthält einen Prozessor und einen Datenspeicher. Der Prozessor ist dazu ausgebildet mit Hilfe eines Programms, das in dem Datenspeicher hinterlegt ist, die Antriebsvorrichtung 2 anzusteuern. Dazu wird in Abhängigkeit des Fahrerwunsches und eines aktuellen Betriebsmodus wie eines rein elektrischen, eines hybridischen oder eines rein verbrennungsmotorischen Betriebsmodus ein verbrennungsmotorisches Soll-Drehmoment und ein elektromotorisches Soll-Drehmoment bestimmt. Die Verbrennungskraftmaschine 20 wird dann so angesteuert, dass sie ein verbrennungsmotorische Betriebsdrehmoment bereitstellt, das dem verbrennungsmotorischen Soll-Drehmoment im Wesentlichen entspricht oder gleich einem maximal abrufbaren verbrennungsmotorischen Drehmoment ist. Die E-Maschine 21 wird so angesteuert, dass sie ein elektromotorische Betriebsdrehmoment bereitstellt, das dem elektromotorischen Soll-Drehmoment im Wesentlichen entspricht oder gleich einem maximal abrufbaren elektromotorischen Drehmoment ist.

Im Falle eines Wechsels von dem rein elektrischen Betriebsmodus in den hybridischen oder den rein verbrennungsmotorischen Betriebsmodus oder in dem hybridischen Betriebsmodus, während sich die Verbrennungskraftmaschine im Stillstand befindet, ist die Motorsteuerung dazu ausgebildet, ein Verfahren 6 zum Betreiben der Verbrennungskraftmaschine 30 während eines Startvorgangs der Verbrennungskraftmaschine 30 aus einem Stillstand auszuführen, wie es nachfolgend mit Bezug auf Fig. 2 beschrieben wird. Der Startvorgang kann aus dem elektrischen Fahrbetrieb im hybridischen Betriebsmodus erfolgen oder aus dem rein elektrischen Betriebsmodus.

Bei 60 in Fig. 2 wird erkannt, ob ein Startvorgang der Verbrennungskraftmaschine aus einem Stillstand auf hohe Lasten erforderlich ist, und ein solcher Startvorgang, wenn er erforderlich ist, eingeleitet. Dabei wird erkannt, ob ein Fahrer über einen entsprechenden Fahrerwunsch ein stark erhöhtes Gesamtmoment (Fahrerwunschmoment M_{F}) anfordert, das eine Zuschaltung der im Stillstand befindlichen Verbrennungskraftmaschine auf hohe Lasten erfordert.

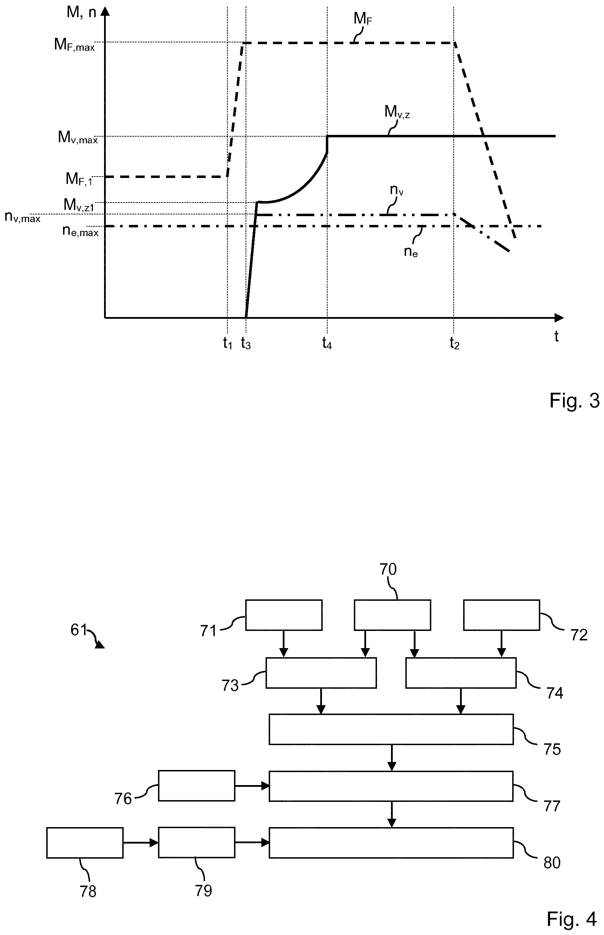

Ein beispielhafter Verlauf des Fahrerwunschmoments M_{F}, der eine starke Erhöhung des Fahrerwunschmoments umfasst, ist in Fig. 3 gezeigt. Das Fahrerwunschmoment M_{F} liegt vor einem Zeitpunkt t₁ konstant bei einem ersten Wert M_{F,0}, der alleine durch die E-Maschine bereitgestellt werden kann. Entsprechend ist eine Drehzahl nₑ der E-Maschine vor t₁ konstant bei einem Wert n_{e,max} und die Verbrennungskraftmaschine befindet sich im Stillstand. Zum Zeitpunkt t₁ steigt das Fahrerwunschmoments M_{F} abrupt mit großer Steigung auf einen zweiten Wert M_{F,max} an, der bis zum Zeitpunkt t₂ konstant bleibt. Zwischen t₁ und t₂ ist die Drehzahl nₑ der E-Maschine konstant bei dem Wert n_{e,max} und nach kurzer Verzögerung steigt eine Drehzahl nᵥ der Verbrennungskraftmaschine bei t₃ auf einem Wert n_{v,max}. Nach t₂ fällt das Fahrerwunschmoments M_{F} auf einen niedrigeren Wert ab. Entsprechend nimmt auch die Drehzahl nᵥ der Verbrennungskraftmaschine ab.

Bei 61 wird kontinuierlich während des gesamten Startvorgangs der Verbrennungskraftmaschine zwischen t₁ und t₄ ein maximal zulässiges verbrennungsmotorisches Drehmoment M_{v,z} bestimmt. Das Bestimmen des maximal zulässigen verbrennungsmotorischen Drehmoments M_{v,z} wird weiter unten mit Bezug auf Fig. 4 erläutert.

Bei 62 wird die Verbrennungskraftmaschine in Abhängigkeit des verbrennungsmotorischen Soll-Drehmoments und des maximal zulässigen verbrennungsmotorischen Drehmoments M_{v,z} gesteuert.

Fig. 4 erläutert das Bestimmen 61 des maximal zulässigen verbrennungsmotorischen Drehmoments M_{v,z}.

Bei 70 wird eine Öltemperatur T_{ö}, die von dem in dem Schmiermittelkreislauf der Verbrennungskraftmaschine angeordneten Öltemperatursensor erfasst wird, empfangen. Da sich die Öltemperatur T_{ö} während des Startvorgangs der Verbrennungskraftmaschine nur unmerklich ändert, wird die Öltemperatur am Beginn des Startvorgangs der Verbrennungskraftmaschine empfangen.

Bei 71 wird kontinuierlich eine Zeit tᵥₛ seit dem Ende des Stillstand der Verbrennungskraftmaschine aufgezeichnet.

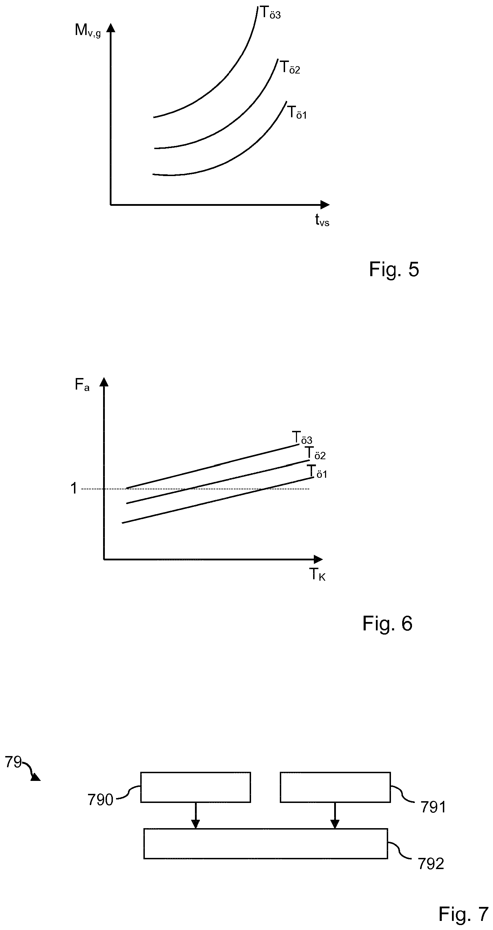

Bei 73 wird in Abhängigkeit der Öltemperatur T_{ö} und der Zeit tᵥₛ seit dem Ende des Stillstands bzw. des Beginns des Startvorgangs der Verbrennungskraftmaschine ein maximal zulässiges Grunddrehmoment M_{v,g} bestimmt. Dazu ist in dem Datenspeicher der Motorsteuerung ein Modell hinterlegt, beispielsweise das in Fig. 5 gezeigte Kennfeld. Das Kennfeld zeigt, dass das maximal zulässige Grunddrehmoment M_{v,g} größer ist und stärker mit der Zeit steigt, je höher die Öltemperatur T_{ö1}, T_{ö2}, T_{ö3} ist, wobei die Öltemperatur von T_{ö1} nach T_{ö3} ansteigt.

Bei 72 wird eine Kühlmitteltemperatur T_{K} empfangen, die von dem in dem Kühlmittelkreislauf der Verbrennungskraftmaschine angeordneten Kühlwassertemperatursensor erfasst wird. Auch die Kühlmitteltemperatur T_{K} ändert sich während des Startvorgangs der Verbrennungskraftmaschine nur unmerklich und wird daher nur am Beginn des Startvorgangs der Verbrennungskraftmaschine empfangen.

Bei 74 wird basierend auf der Öltemperatur T_{ö} und der Kühlwassertemperatur T_{K} ein Anpassungsfaktor Fₐ bestimmt. Der Anpassungsfaktor Fₐ wird aus einem Kennfeld über die Öltemperatur T_{ö} und die Kühlmitteltemperatur T_{K} abgelesen, das einen Zusammenhang zwischen der Öltemperatur T_{ö} und Kühlmitteltemperatur T_{K} einerseits und dem Schmierzustand der Verbrennungskraftmaschine andererseits widergibt. Ein solches Kennfeld, das in dem Datenspeicher der Motorsteuerung hinterlegt ist, ist in Fig. 6 exemplarisch dargestellt. Fig. 6 zeigt, dass der Anpassungsfaktor Fₐ Werte um 1 annimmt und mit steigender Kühlwassertemperatur T_{K} ansteigt. Dabei ist der Anpassungsfaktor Fₐ bei niedrigen Öltemperaturen T_{ö1} geringer als bei hohen Öltemperaturen T_{ö3}.

Bei 75 wird das maximal zulässige Grunddrehmoment M_{v,g} abhängig von dem bestimmten Anpassungsfaktor Fₐ anpasst. Je höher die Öltemperatur T_{ö} und die Kühlmitteltemperatur T_{K} sind, desto größer ist der Anpassungsfaktor Fₐ und damit das angepasste zulässige Grunddrehmoment. Entsprechend wird eine Begrenzung des maximal zulässigen Drehmoments angepasst.

Bei 76 wird ein Kurbelwellensensorsignal empfangen und durch Auswerten des Kurbelwellensensorsignals (Zylinderzähler) eine Anzahl an Verbrennungen seit dem Beginn des Startvorgangs bestimmt.

Bei 77 wird, wenn eine vorgegebene Anzahl an Verbrennungen seit dem Beginn des Startvorgangs ausgeführt wurde, das angepasste maximal zulässige Drehmoment auf das maximal abrufbare verbrennungsmotorische Drehmoment M_{v,max} aufgerampt bzw. vergrößert.

Bei 78 wird durch Auswerten eines gespeicherten Kurbelwellensensorsignals die Dauer des vorangegangenen Stillstands der Verbrennungskraftmaschine, die Dauer seit dem vorangegangenen Schmiervorgang der Verbrennungskraftmaschine, die Dauer des vorangegangenen Betriebs der Verbrennungskraftmaschine und/oder die Dauer des vorangegangenen Schmiervorgangs der Verbrennungskraftmaschine bestimmt. Das gespeicherte Kurbelwellensensorsignals ist in dem Datenspeicher hinterlegt und erstreckt sich über einen Zeitraum, der ein Intervall von einem vorangegangenen Start der Verbrennungskraftmaschine bis zu dem Beginn des Startvorgangs der Verbrennungskraftmaschine umfasst.

Bei 79 wird abhängig von der Dauer des vorangegangenen Stillstands der Verbrennungskraftmaschine, der Dauer seit dem vorangegangenen Schmiervorgang der Verbrennungskraftmaschine, der Dauer des vorangegangenen Betriebs der Verbrennungskraftmaschine und der Dauer des vorangegangenen Schmiervorgangs der Verbrennungskraftmaschine ein Erhöhungsfaktor F_{E} bestimmt. Der Erhöhungsfaktor F_{E} ist gleich oder größer als 1. Das Bestimmen 79 des Erhöhungsfaktors F_{E} wird nachfolgend mit Bezug auf die Fig. 7 erklärt.

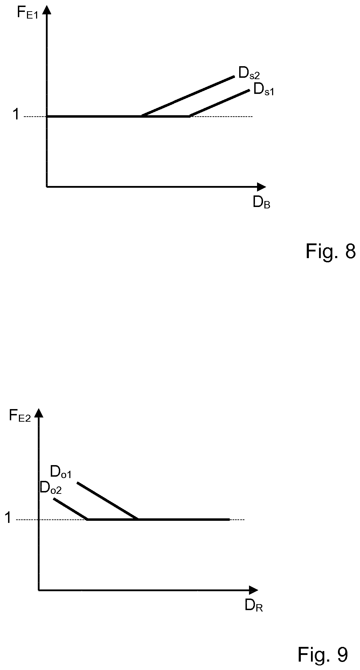

Bei 790 wird ein erster Faktor F_{E1} abhängig von der Dauer D_{B} des vorangegangenen Betriebs der Verbrennungskraftmaschine und der Dauer D_{S} des vorangegangenen Schmiervorgangs der Verbrennungskraftmaschine bestimmt. Fig. 8 zeigt exemplarisch zwei Verläufe des ersten Faktors F_{E1} in Abhängigkeit der Dauer D_{B} des vorangegangenen Betriebs der Verbrennungskraftmaschine für die Dauern D_{S1}, D_{S2} des vorangegangenen Schmiervorgangs der Verbrennungskraftmaschine, wobei D_{S1} kürzer ist als D_{S2}.

Bei 791 wird ein zweiter Faktor F_{E2} abhängig von der Dauer D_{R} des vorangegangenen Stillstands der Verbrennungskraftmaschine und der Dauer D_{O} seit dem vorangegangenen Schmiervorgang der Verbrennungskraftmaschine bestimmt. Fig. 9 zeigt exemplarisch zwei Verläufe des zweiten Faktors F_{E2} in Abhängigkeit der Dauer D_{R} des vorangegangenen Stillstands der Verbrennungskraftmaschine und der Dauer D_{O} seit dem vorangegangenen Schmiervorgang der Verbrennungskraftmaschine, wobei D_{O1} kürzer ist als D_{O2}.

Bei 792 werden der erste Faktor F_{E1} und der zweite Faktor F_{E2} dann zu dem Erhöhungsfaktor F_{E} kombiniert, wobei der Erhöhungsfaktor nie kleiner als 1 ist. Bei der Kombination wird der jeweils kleinere des ersten und des zweiten Faktors F_{E1}, F_{E2} übernommen.

Wenn der Verbrenner sehr lange stand, also nicht gedreht hat, ist davon auszugehen, dass die Ölgalerie leer gelaufen ist. In diesem Fall wird ein Faktor von 1 ausgeben, sodass das oben gebildete Limitierungsmoment ausgeben wird.

Hat der Verbrenner schon gedreht und/oder der Motor-Stillstand liegt nicht zu lang zurück, so kann der Erhöhungsfaktor F_{E} größer 1 ausgegeben werden. Damit ist die Momentenlimitierung nicht mehr so stark.

Bei 80 in Fig. 4 wird das maximal zulässige verbrennungsmotorische Drehmoment bestimmt, indem das angepasste maximal zulässige Grunddrehmoment abhängig von dem bestimmten Erhöhungsfaktor F_{E} angepasst wird. Wenn der Erhöhungsfaktor F_{E} gleich 1 ist, entspricht das maximal zulässige Grunddrehmoment dem angepassten maximal zulässigen Grunddrehmoment und, wenn der Erhöhungsfaktor F_{E} größer als 1 ist, wird das angepasste maximal zulässige Grunddrehmoment erhöht.

Das maximal zulässige Drehmoment M_{v,z} ist in Fig. 3 gezeigt. Das maximal zulässige Drehmoment M_{v,z} steigt nach t₃ steil auf einen Wert M_{v,z1} an und steigt dann in einer Rampe auf das maximal mögliche Drehmoment M_{v,max} an. Solange das angeforderte Fahrerwunschmoment M_{F} den Betrieb der Verbrennungskraftmaschine erfordert und es zu keinem Stillstand dieser kommt, bleibt das maximal zulässige verbrennungsmotorische Drehmoment M_{v,z} auf dem maximal möglichen Drehmoment M_{v,max}.

### Bezugszeichenliste

- 1: Hybridfahrzeug
- 10: Kurbelwelle
- 11: Getriebe
- 12: Antriebsachse
- 2: Antriebsvorrichtung
- 20: Verbrennungskraftmaschine
- 200: Schmiermittelkreislauf
- 201: Kühlmittelkreislauf
- 202: Öltemperatursensor
- 203: Kühlwassertemperatursensor
- 21: E -Maschine
- 3: Motorsteuerung
- 40, 41, 42, 43, 44: Datenleitungen
- 5: Gaspedal
- 6: Verfahren zum Betreiben der Verbrennungskraftmaschine
- 60: Erkennen, ob ein Startvorgang der Verbrennungskraftmaschine aus einem Stillstand auf hohe Lasten erforderlich ist
- 61: Bestimmen eines maximal zulässigen verbrennungsmotorischen Drehmoments
- 62: Steuern der Verbrennungskraftmaschine
- 70: Empfangen der Öltemperatur
- 71: Aufzeichnen der Zeit seit dem Ende des Stillstand der Verbrennungskraftmaschine
- 72: Bestimmen eines maximal zulässigen Grunddrehmoments
- 73: Empfangen der Kühlmitteltemperatur
- 74: Bestimmen eines Anpassungsfaktors
- 75: Anpassen des maximal zulässigen Grunddrehmoments
- 76: Bestimmen einer Anzahl an Verbrennungen seit Beginn des Startvorgangs
- 77: Vergrößern des angepassten maximal zulässigen Grunddrehmoments nach einer vorgegebenen Anzahl an Verbrennungen
- 78: Auswerten eines gespeicherten Kurbelwellensensorsignals
- 79: Bestimmen eines Erhöhungsfaktors
- 790: Bestimmen eines ersten Faktors
- 791: Bestimmen eines zweiten Faktors
- 792: Kombinieren des ersten und des zweiten Faktors
- 80: Bestimmen des maximal zulässigen verbrennungsmotorischen Drehmoments
- D_{B}: Dauer des vorangegangenen Betriebs
- D_{S}, D_{S1}, D_{S2}: Dauer des vorangegangenen Schmiervorgangs der Verbrennungskraftmaschine
- D_{R}: Dauer des vorangegangenen Stillstands der Verbrennungskraftmaschine
- D_{O}, D_{O1}, D_{O2}: Dauer seit dem vorangegangenen Schmiervorgang der Verbrennungskraftmaschine
- Fₐ: Anpassungsfaktor
- F_{E}: Erhöhungsfaktor
- F_{E1}: erster Faktor
- F_{E2}: zweiter Faktor
- M_{F}: Fahrerwunschmoment
- M_{F,1}: erster Wert des Fahrerwunschmoments
- M_{F,max}: zweiter Wert des Fahrerwunschmoments
- M_{v,max}: maximal abrufbares verbrennungsmotorisches Drehmoment
- M_{v,z}: maximal zulässiges verbrennungsmotorisches Drehmoment
- M_{v,z1}: maximal zulässige Drehmoment direkt nach Beginn des Startvorgangs
- M_{v,g}: maximal zulässiges verbrennungsmotorisches Grunddrehmoment
- nₑ: Drehzahl der E-Maschine
- n_{e,max}: maximale Drehzahl der E-Maschine
- nᵥ: Drehzahl der Verbrennungskraftmaschine
- n_{v,max}: maximale Drehzahl der Verbrennungskraftmaschine
- t₁: Zeitpunkt einer Erhöhung des Fahrerwunschmoments
- t₂: Zeitpunkt einer Reduktion des Fahrerwunschmoments
- t₃: Zeitpunkt einer Drehzahlerhöhung und einer Erhöhung des maximal zulässigen Drehmoments der Verbrennungskraftmaschine
- t₄: Zeitpunkt eines Endes eines Startvorgangs der Verbrennungskraftmaschine
- tᵥₛ: Zeit seit Beginn des Startvorgangs
- T_{ö}, T_{ö1}, T_{ö2}, T_{ö3}: Öltemperatur
- T_{K}: Kühlmitteltemperatur

## Patentansprüche

1. Verfahren zum Betreiben einer Verbrennungskraftmaschine (20) eines Hybridfahrzeugs während eines Startvorgangs der Verbrennungskraftmaschine (20), umfassend:
Erhalten einer Schmierzustandsgröße, die einen Schmierzustand der Verbrennungskraftmaschine (20) abbildet, wobei die Schmierzustandsgröße eine Schmiermitteltemperatur (Tö) von Schmiermittel in der Verbrennungskraftmaschine (20) oder einen Schmiermitteldruck des Schmiermittels in der Verbrennungskraftmaschine (20) umfasst;
Bestimmen (72) eines maximal zulässigen Grunddrehmoments (M_{v,g}) der Verbrennungskraftmaschine (20) abhängig von der Schmiermitteltemperatur (T_{ö}) des Schmiermittels in der Verbrennungskraftmaschine (20) oder von dem Schmiermitteldruck des Schmiermittels in der Verbrennungskraftmaschine (20) ,
Bestimmen(79) eines Erhöhungsfaktors (F_{E}) abhängig von einer Dauer (D_{R}) eines vorangegangenen Stillstands der Verbrennungskraftmaschine (20), einer Dauer (D_{B}) eines vorangegangenen Betriebs der Verbrennungskraftmaschine (20) und/oder einer Dauer (D_{S}) eines vorangegangenen Schmiervorgangs der Verbrennungskraftmaschine (20),
Bestimmen (80) eines maximal zulässigen Drehmoments, indem das maximal zulässige Grunddrehmoment (M_{v,g}) abhängig von dem bestimmten Erhöhungsfaktor (F_{E}) angepasst wird, und
Betreiben (62) der Verbrennungskraftmaschine (20) bei einem Betriebsdrehmoment, das dem bestimmten maximal zulässigen Drehmoment (M_{v,z}) entspricht oder kleiner als dieses ist, wobei das Betriebsdrehmoment, wenn das maximal mögliche Drehmoment (M_{v,max}) angefordert wird, während des Startvorgangs dem maximal zulässigen Drehmoment (M_{v,z}) entspricht,
**dadurch gekennzeichnet, dass** die Verbrennungskraftmaschine angedreht wird, um eine Ölgalerie zu befüllen und/oder Bauteile der Verbrennungskraftmaschine mit Öl zu versorgen, und dass der Erhöhungsfaktor (F_{E}) zusätzlich von einer Dauer (D_{O}) seit einem vorangegangenen Schmiervorgang der Verbrennungskraftmaschine (20) abhängt, wobei der Erhöhungsfaktor (F_{E}) gleich oder größer 1 ist und wobei das maximal zulässige Drehmoment, wenn der Erhöhungsfaktor (F_{E}) gleich 1 ist, dem maximal zulässigen Grunddrehmoment entspricht und wobei das maximal zulässige Grunddrehmoment, wenn der Erhöhungsfaktor (F_{E}) größer als 1 ist, erhöht wird.

2. Verfahren nach Anspruch 1, wobei das maximal zulässige Drehmoment (M_{v,z}) der Verbrennungskraftmaschine (20) mit steigender Zeit nach einem Start der Verbrennungskraftmaschine (20) oder steigender Anzahl an Verbrennungen seit dem Start der Verbrennungskraftmaschine (20) angehoben wird.

3. Verfahren nach Anspruch 1 oder 2, wobei
abhängig von der Schmiermitteltemperatur (Tö) und/oder einer Kühlmitteltemperatur (T_{K}) ein Anpassungsfaktor (Fₐ) bestimmt wird; und
das maximal zulässige Grunddrehmoment (M_{v,g}) abhängig von dem bestimmten Anpassungsfaktor (Fₐ) angepasst wird.

4. Verfahren nach einem der Ansprüche 1 bis 3, wobei
das maximal zulässige Grunddrehmoment (M_{v,g}) nach einer vorgegebenen Anzahl an Verbrennungen und/oder Kurbelwellenumdrehungen der Verbrennungskraftmaschine (20) seit einem Ende des Stillstands der Verbrennungskraftmaschine (20) auf ein maximal mögliches Drehmoment (M_{v,max}) der Verbrennungskraftmaschine (20) erhöht wird.

5. Verfahren nach einem der Ansprüche 1 bis 4, wobei die Verbrennungskraftmaschine (20), die eine Verbrennungskraftmaschine eines Hybridfahrzeugs (1) ist, das weiterhin eine elektrische Maschine (21) oder einen anderen Antrieb aufweist, während eines Betriebs der elektrischen Maschine (21) oder des anderen Antriebs gestartet wird.

6. Motorsteuerung (3) zum Betreiben einer Verbrennungskraftmaschine (20) eines Hybridfahrzeugs während eines Startvorgangs der Verbrennungskraftmaschine (20) die einen Prozessor, einen Datenspeicher und die Mittel zur Begrenzung des angeforderten Betriebsdrehmoments der Verbrennungskraftmaschine (20) umfasst, wobei die Verbrennungskraftmaschine angedreht werden kann, um so die Ölgalerie zu befüllen und/oder die Bauteile der Verbrennungskraftmaschine mit Öl zu versorgen; und wobei die Motorsteuerung (3) dazu ausgebildet ist, ein Verfahren nach einem der vorhergehenden Ansprüche auszuführen.

## Claims

1. Method for operating an internal combustion engine (20) of a hybrid vehicle during a starting-up process of the internal combustion engine (20), comprising:
obtaining a lubrication state variable which represents a lubrication state of the internal combustion engine (20), the lubrication state variable comprising a lubricant temperature (T_{ö}) of lubricant in the internal combustion engine (20) or a lubricant pressure of the lubricant in the internal combustion engine (20),
determining (72) a maximum permissible basic torque (M_{v,g}) of the internal combustion engine (20) depending on the lubricant temperature (T_{ö}) of the lubricant in the internal combustion engine (20) or on the lubricant pressure of the lubricant in the internal combustion engine (20),
determining (79) an increase factor (F_{E}) depending on a duration (D_{R}) of a previous standstill of the internal combustion engine (20), a duration (D_{B}) of a previous operation of the internal combustion engine (20) and/or a duration (Ds) of a previous lubrication process of the internal combustion engine (20),
determining (80) a maximum permissible torque by adjusting the maximum permissible basic torque (M_{v,g}) depending on the determined increase factor (F_{E}), and
operating (62) the internal combustion engine (20) at an operating torque which corresponds to or is less than the determined maximum permissible torque (M_{v,z}), the operating torque corresponding to the maximum permissible torque (M_{v,z}) during the starting-up process if the maximum possible torque (M_{v,max}) is requested,
**characterized in that** the internal combustion engine is switched on in order to fill an oil gallery and/or to supply components of the internal combustion engine with oil, **and in that** the increase factor (F_{E}) depends additionally on a duration (Do) since a previous lubrication process of the internal combustion engine (20), the increase factor (F_{E}) being equal to or greater than 1, and the maximum permissible torque corresponding to the maximum permissible basic torque if the increase factor (F_{E}) is equal to 1, and the maximum permissible basic torque being increased if the increase factor (F_{E}) is greater than 1.

2. Method according to claim 1, wherein the maximum permissible torque (M_{v,z}) of the internal combustion engine (20) is increased as time goes on after starting up the internal combustion engine (20) or is increased as the number of combustions increases since the start up of the internal combustion engine (20).

3. Method according to claim 1 or claim 2, wherein
an adjustment factor (Fₐ) is determined depending on the lubricant temperature (T_{ö}) and/or a coolant temperature (T_{K}); and
the maximum permissible basic torque (M_{v,g}) is adjusted depending on the determined adjustment factor (Fₐ).

4. Method according to any of claims 1 to 3, wherein
the maximum permissible basic torque (M_{v,g}) is increased to a maximum possible torque (M_{v,max}) of the internal combustion engine (20) after a predetermined number of combustions and/or crankshaft revolutions of the internal combustion engine (20) since the end of a standstill of the internal combustion engine (20).

5. Method according to any of claims 1 to 4, wherein the internal combustion engine (20), which is an internal combustion engine of a hybrid vehicle (1) which further comprises an electric machine (21) or another drive, is started up during operation of the electric machine (21) or the other drive.

6. Engine controller (3) for operating an internal combustion engine (20) of a hybrid vehicle during a starting-up process of the internal combustion engine (20), which engine controller comprises a processor, a data memory and the means for limiting the requested operating torque of the internal combustion engine (20), wherein the internal combustion engine can be switched on in order to fill the oil gallery and/or supply the components of the internal combustion engine with oil; and wherein the engine controller (3) is designed to carry out a method according to any of the preceding claims.

## Revendications

1. Procédé de fonctionnement d'un moteur à combustion interne (20) d'un véhicule hybride pendant un processus de démarrage du moteur à combustion interne (20), comprenant :
l'obtention d'une quantité d'état de lubrification représentant un état de lubrification du moteur à combustion interne (20), dans lequel la quantité d'état de lubrification comprend une température de lubrifiant (T_{ö}) du lubrifiant dans le moteur à combustion interne (20) ou une pression de lubrifiant du lubrifiant dans le moteur à combustion interne (20) ;
la détermination (72) d'un couple de base maximal admissible (M_{v,g}) du moteur à combustion interne (20) en fonction de la température (T_{ö}) de lubrifiant du lubrifiant dans le moteur à combustion interne (20) ou de la pression de lubrifiant du lubrifiant dans le moteur à combustion interne (20),
la détermination (79) d'un facteur d'augmentation (F_{E}) en fonction d'une durée (D_{R}) d'un arrêt précédent du moteur à combustion interne (20), d'une durée (D_{B}) d'un fonctionnement précédent du moteur à combustion interne (20) et/ou d'une durée (Ds) d'une opération de lubrification précédente du moteur à combustion interne (20),
la détermination (80) d'un couple maximal admissible en adaptant le couple de base maximal admissible (M_{v,g}) en fonction du facteur d'augmentation (F_{E}) déterminé, et
le fonctionnement (62) du moteur à combustion interne (20) à un couple de fonctionnement correspondant ou inférieur au couple maximal admissible (M_{v,z}) déterminé, dans lequel, lorsque le couple maximal (M_{v,max}) possible est demandé, le couple de fonctionnement correspond au couple maximal admissible (M_{v,z}) pendant le processus de démarrage,
**caractérisé en ce que** le moteur à combustion interne est mis en rotation pour remplir une galerie d'huile et/ou pour alimenter en huile des composants du moteur à combustion interne, **et en ce que** le facteur d'augmentation (F_{E}) dépend en outre d'une durée (Do) depuis un processus de lubrification précédent du moteur à combustion interne (20), dans lequel le facteur d'augmentation (F_{E}) est égal ou supérieur à 1 et dans lequel le couple maximal admissible, lorsque le facteur d'augmentation (F_{E}) est égal à 1, correspond au couple de base maximal admissible et dans lequel le couple de base maximal admissible, lorsque le facteur d'augmentation (F_{E}) est supérieur à 1, est augmenté.

2. Procédé selon la revendication 1, dans lequel le couple maximal admissible (M_{v,z}) du moteur à combustion interne (20) est augmenté avec l'augmentation du temps après un démarrage du moteur à combustion interne (20) ou l'augmentation du nombre de combustions depuis le démarrage du moteur à combustion interne (20).

3. Procédé selon la revendication 1 ou 2, dans lequel
un facteur d'adaptation (Fₐ) est déterminé en fonction de la température de lubrifiant (T_{ö}) et/ou d'une température de liquide de refroidissement (T_{K}) ; et
le couple de base maximal admissible (M_{v,g}) est adapté en fonction du facteur d'adaptation (Fₐ) déterminé.

4. Procédé selon l'une des revendications 1 à 3, dans lequel
le couple de base maximal admissible (M_{v,g}) est augmenté après un nombre prédéterminé de combustions et/ou de tours de vilebrequin du moteur à combustion interne (20) depuis une fin de l'arrêt du moteur à combustion interne (20) jusqu'à un couple maximal possible (M_{v,max}) du moteur à combustion interne (20).

5. Procédé selon l'une des revendications 1 à 4, dans lequel le moteur à combustion interne (20), qui est un moteur à combustion interne d'un véhicule hybride (1) qui présente en outre une machine électrique (21) ou un autre entraînement, est démarré pendant un fonctionnement de la machine électrique (21) ou de l'autre entraînement.

6. Commande de moteur (3) pour le fonctionnement d'un moteur à combustion interne (20) d'un véhicule hybride pendant un processus de démarrage du moteur à combustion interne (20), comprenant un processeur, une mémoire de données et les moyens pour limiter le couple de fonctionnement demandé du moteur à combustion interne (20), dans lequel le moteur à combustion interne peut être mis en rotation de manière à remplir la galerie d'huile et/ou à alimenter en huile les composants du moteur à combustion interne ; et dans lequel la commande de moteur (3) est conçue pour mettre en œuvre un procédé selon l'une des revendications précédentes.
